(19) Europäisches Patentamt
European Patent Office
Office européen des brevets

(11) EP 4 174 126 A1

(12) EUROPEAN PATENT APPLICATION
published in accordance with Art. 153(4) EPC

(43) Date of publication:
**03.05.2023 Bulletin 2023/18**

(21) Application number: **21830270.1**

(22) Date of filing: **18.06.2021**

(51) International Patent Classification (IPC):
***C08K 5/10*** (2006.01) ***C08L 67/00*** (2006.01)
***C08L 101/00*** (2006.01) ***G02B 1/04*** (2006.01)

(52) Cooperative Patent Classification (CPC):
**C08K 5/10; C08L 67/00; C08L 101/00; G02B 1/04**

(86) International application number:
**PCT/JP2021/023186**

(87) International publication number:
**WO 2021/261392 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2020 JP 2020110361**

(71) Applicant: **MITSUBISHI GAS CHEMICAL COMPANY, INC.**
**Chiyoda-ku**
**Tokyo 100-8324 (JP)**

(72) Inventors:
- **SUEMATSU Mitsutake**
  **Tokyo 100-8324 (JP)**
- **IKEDA Shinya**
  **Niigata-shi, Niigata 950-3121 (JP)**
- **KATO Noriyuki**
  **Tokyo 100-8324 (JP)**
- **KONDO Mitsuteru**
  **Tokyo 100-8324 (JP)**
- **NISHIMORI Katsushi**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) RESIN COMPOSITION

(57) Provided is a resin composition that is highly fluid and has good moldability, and that has excellent optical properties. More specifically, provided is a resin composition that contains a thermoplastic resin and a specific compounding agent containing a naphthalene structure and/or a fluorene structure.



Processed by Luminess, 75001 PARIS (FR)

**Description**

FIELD OF THE INVENTION

the present invention relates to a resin composition. More particularly, the present invention relates to a resin composition containing a thermoplastic resin and a specific compounding agent.

BACKGROUND ART

Optical glasses and optical resins are used as a material for optical lenses used in optical systems of various cameras including cameras, film-integrated cameras, and video cameras. Optical glasses are excellent in heat resistance, transparency, dimensional stability, and chemical resistance. However, they have the problems of high material cost, poor formability, and low productivity.

On the other hand, optical lenses made of optical resins are advantageous in that they can be mass-produced by injection molding, and polycarbonate, polyester carbonate, polyester resins, and the like are used as a high refractive index material for camera lenses.

For optical resins used as optical lenses, heat resistance, transparency, low water absorption, chemical resistance, low birefringence, moist heat resistance, and the like are required as well as optical properties such as refractive index and Abbe number. Recently, there is a particular demand for optical lenses having a high refractive index and high heat resistance and thus various resins have been developed (Patent literatures 1-5).

However, there is still a need for a thermoplastic resin composition that is highly fluid and that has good formability and excellent optical properties, without compromising the properties required for optical resin compositions.

PRIOR ART LITERATURE

Patent literature

Patent literature 1: JP 2018-2893A
Patent literature 2: JP 2018-2894A
Patent literature 3: JP 2018-2895A
Patent literature 4: JP 2018-59074A
Patent literature 5: WO 2017/078073

SUMMARY OF INVENTION

Problem to be solved by invention

The present invention provides a thermoplastic resin composition that is highly fluid and that has good formability and excellent optical properties without compromising the properties as an optical resin composition.

Means for solving the problem

In order to solve the conventional problem, the present inventors have conducted intensive studies and found that a thermoplastic resin composition can have a low Tg by addition of a specific compounding agent to the thermoplastic resin, and that therefore such thermoplastic resin composition that is highly fluid and that has good formability and excellent optical properties can be obtained, thereby accomplishing the present invention.

Specifically, the present invention includes the following aspects.

<1> A resin composition comprising:

a thermoplastic resin; and
a compounding agent having a naphthalene structure and/or a fluorene structure,
wherein the compounding agent having a naphthalene structure and/or a fluorene structure contains one or more compounds selected from compounds containing a structural unit represented by any of General formulae (1)-(3) below:

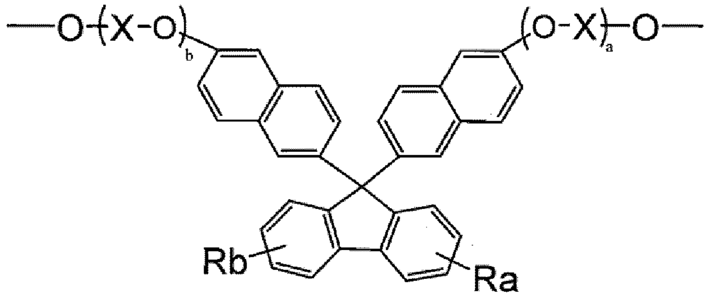

(1)

(in Formula (1),

$R_a$ and $R_b$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
a and b each independently represent an integer from 0 to 10);

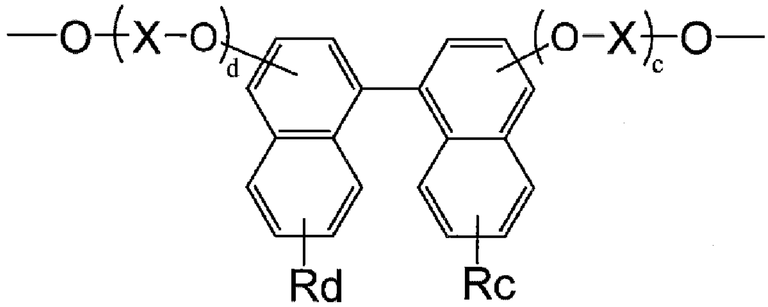

(2)

(in Formula (2),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$,
$R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10); and

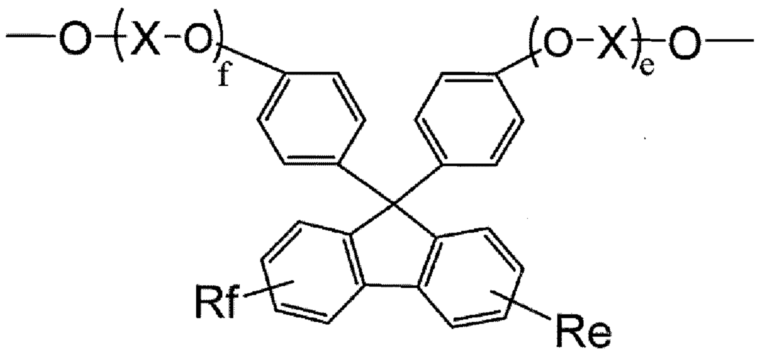

(3)

(in Formula (3),

$R_e$ and $R_f$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
e and f each independently represent an integer from 0 to 10).

<2> The resin composition according to <1>, wherein the compounding agent having a naphthalene structure and/or a fluorene structure is one or more selected from the group consisting of diol monomers having a structural unit represented by any of General formulae (1) to (3), and polycarbonate oligomers containing a structural unit represented by any of General formulae (1)-(3) as a diol structure.
<3> The resin composition according to <2>, wherein the polycarbonate oligomer containing a structural unit represented by any of General formulae (1) to (3) above as a diol structure is represented by any of the following formulae, and wherein $R_a$, $R_b$, $R_c$, $R_d$, $R_e$, $R_f$, a, b, c, d, e, and f are the same as those described in <1>:

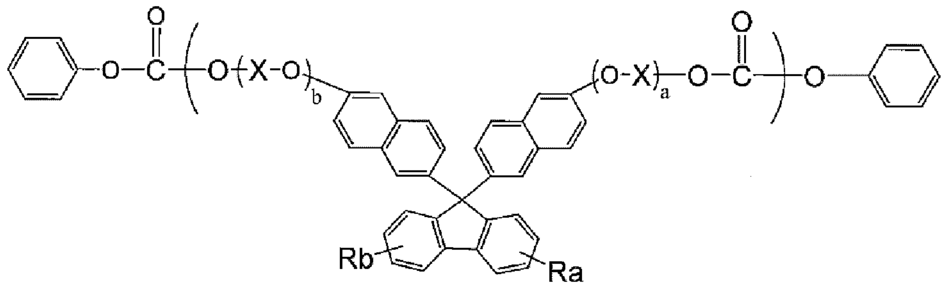

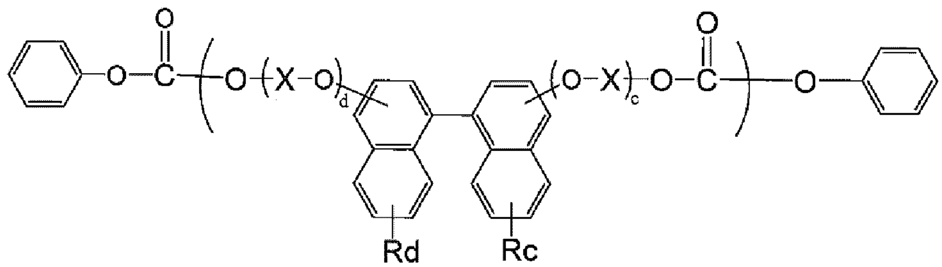

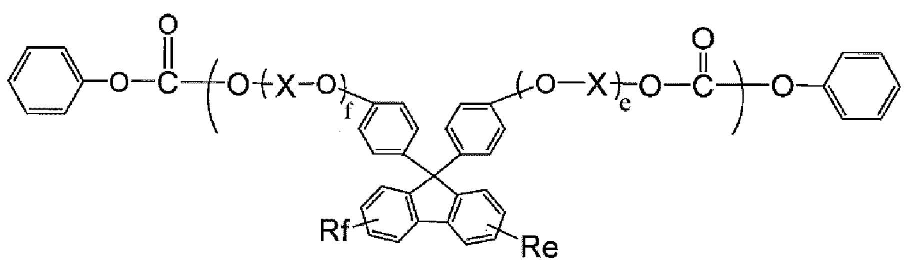

<4> The resin composition according to any one of <1> to <3>, wherein the 5% thermal mass reduction onset temperature (5% thermal mass reduction temperature) of the compounding agent is 260°C or higher.
<5> The resin composition according to any one of <1> to <4>, wherein the mass average molecular weight of the compounding agent is less than 10,000.
<6> The resin composition according to any one of <1> to <5>, wherein the mass ratio of the thermoplastic resin to the compounding agent is thermoplastic resin:compounding agent = 99:1 to 70:30.
<7> The resin composition according to any one of <1> to <6>, wherein the polystyrene-equivalent molecular weight (Mw) of the thermoplastic resin is 10,000-100,000.
<8> The resin composition according to any one of <1> to <7>, wherein the thermoplastic resin is selected from the group consisting of a polycarbonate resin, a polyester resin, and a polyester carbonate resin.
<9> The resin composition according to any one of <1> to <8>, wherein the thermoplastic resin contains a structural

unit derived from a compound represented by General formula (a) below:

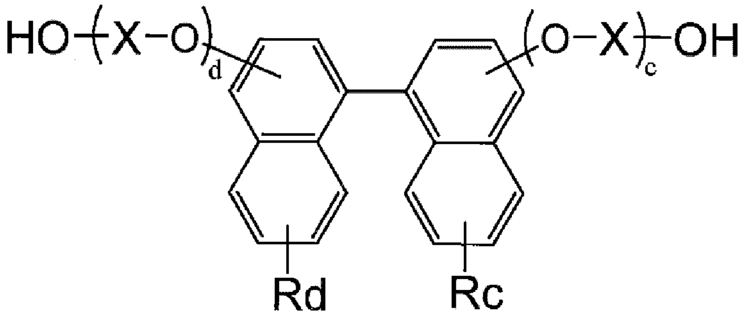

(a)

(in Formula (a),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - $C{\equiv}C-R_h$, $R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10).

<10> An optical material comprising the resin composition according to any one of <1> to <9>.
<11> An optical lens comprising the resin composition according to any one of <1> to <9>.
<12> An optical film comprising the resin composition according to any one of <1> to <9>.

EFFECTS OF INVENTION

The present invention can provide a thermoplastic resin composition which is highly fluid and which has excellent optical properties and good formability without compromising the properties as an optical resin composition.

MODE FOR CARRYING OUT INVENTION

1. Resin composition

The resin composition of the present invention contains a thermoplastic resin and a specific compounding agent having a naphthalene structure and/or a fluorene structure. By compounding the thermoplastic resin with a specific compounding agent having a naphthalene structure and/or a fluorene structure, a thermoplastic resin composition which is highly fluid and which has excellent optical properties and good formability can be obtained without compromising the properties as an optical resin composition.

1-1. Compounding agent

In a resin composition of the present invention, the compounding agent having a naphthalene structure and/or a fluorene structure includes one or more selected from compounds containing a structural unit represented by any of General formulae (1)-(3) below. One kind or two or more kinds of compounds containing a structural unit represented by any of General formulae (1)-(3) below may be used alone or in combination.

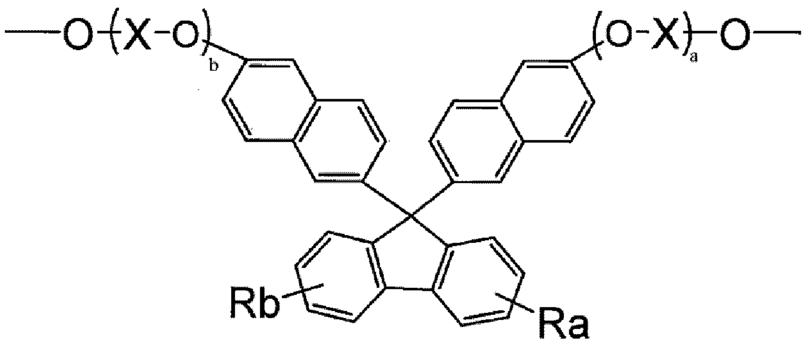

(1)

(In Formula (1),

$R_a$ and $R_b$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
a and b each independently represent an integer from 0 to 10);

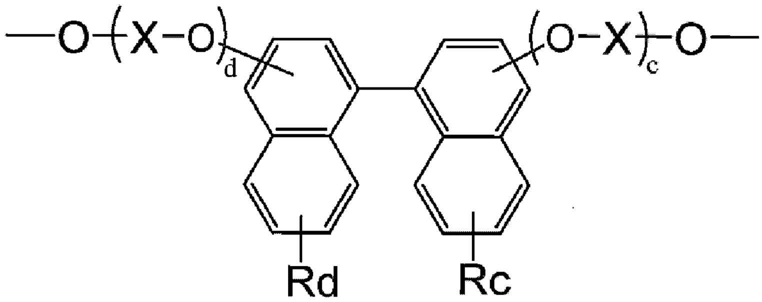

(2)

(in Formula (2),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$,
$R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10); and

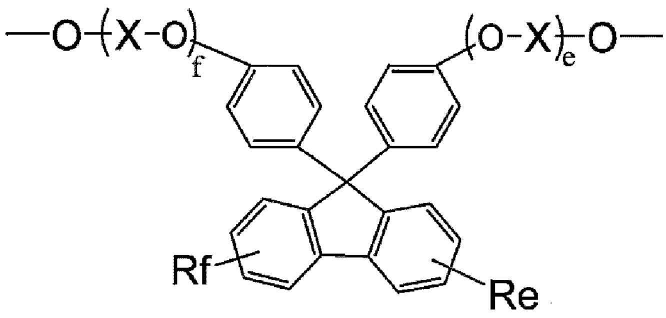

(3)

(in Formula (3),

$R_e$ and $R_f$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
e and f each independently represent an integer from 0 to 10).

Structural units of compounding agent

<Structural unit represented by Formula (1)>

In one embodiment of the present invention, the compounding agent having a naphthalene structure and/or a fluorene structure may be a compound containing a structural unit represented by General formulae (1) below.

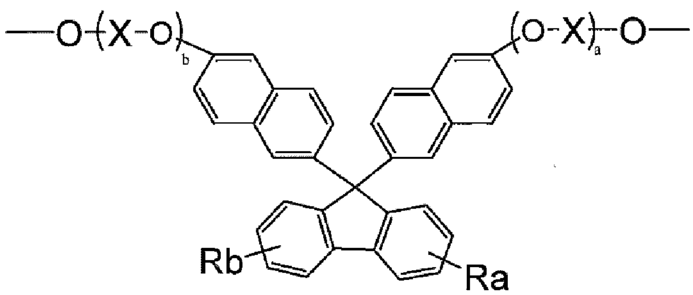

(1)

(In Formula (1),

$R_a$ and $R_b$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
a and b each independently represent an integer from 0 to 10).

According to a preferred embodiment of the present invention, in Formula (1),
$R_a$ and $R_b$ each independently represent a hydrogen atom, a fluorine atom, a chlorine atom, a bromine atom, an iodine atom, an alkyl group with 1-10 carbon atoms, or an aryl group with 6-18 carbon atoms, alkenyl group with 2-15 carbon atoms, alkoxy group with 1-5 carbon atoms, or aralkyl group with 7-17 carbon atoms which may contain a heteroatom selected from O, N and S.

In Formula (1), the alkyl group may more preferably be an alkyl group with 1-6 carbon atoms, and still more preferably methyl.

In Formula (1), the aryl group may more preferably be an aryl group with 6-16 carbon atoms, still more preferably an aryl group with 6-14 carbon atoms, yet still more preferably an aryl group with 6-12 carbon atoms, and more preferably an aryl group with 6-10 carbon atoms.

In Formula (1), the alkenyl group may more preferably be an alkenyl group with 2-10 carbon atoms.

In Formula (1), the alkoxy group may more preferably be an alkoxy group with 1-3 carbon atoms.

In Formula (1), the aralkyl group may more preferably be an aralkyl group with 7-10 carbon atoms.

In Formula (1), X may more preferably be an alkylene group with 1-4 carbon atoms, still more preferably an alkylene group with 1-3 carbon atoms, and yet still more preferably an alkylene group with 2 carbon atoms.

In Formula (1), a and b, each independently, may more preferably be an integer from 0 to 5, still more preferably an integer from 1 to 5, yet still more preferably an integer from 1 to 3, and more preferably 1.

<Structural unit represented by Formula (2)>

In one embodiment of the present invention, the compounding agent having a naphthalene structure and/or a fluorene structure may be a compound containing a structural unit represented by General formulae (2) below.

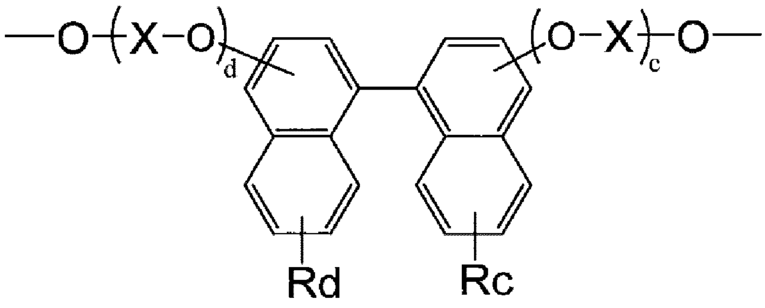

(2)

(In Formula (2),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$,
$R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10).

In a preferred embodiment of the present invention, in Formula (2), $R_c$ and $R_d$ are each independently selected from an aryl group with 6-20 carbon atoms, a heteroaryl group with 6-20 carbon atoms or aryloxy group with 6-20 carbon atoms which contains one or more heteroatoms selected from O, N and S, and -C≡C-$R_b$, and $R_h$ represents an aryl group with 6-20 carbon atoms or a heteroaryl group with 6-20 carbon atoms containing one or more heteroatoms selected from O, N and S.

In Formula (2), the aryl group more preferably has 6-18 carbon atoms, still more preferably 6-16 carbon atoms, yet still more preferably 6-14 carbon atoms, still more preferably 6-12 carbon atoms, and more preferably 6-10 carbon atoms.

In Formula (2), the heteroaryl group more preferably has 6-18 carbon atoms, still more preferably 8-16 carbon atoms, and yet still more preferably 10-14 carbon atoms.

In Formula (2), the aryloxy group more preferably has 6-18 carbon atoms, still more preferably 6-16 carbon atoms, and yet still more preferably 6-14 carbon atoms.

In Formula (2), X may more preferably be an alkylene group with 1-4 carbon atoms, still more preferably an alkylene group with 1-3 carbon atoms, and yet still more preferably an alkylene group with 2 carbon atoms.

In Formula (2), c and d, each independently, may more preferably be an integer from 0 to 5, still more preferably an integer from 1 to 5, yet still more preferably an integer from 1 to 3, and still more preferably 1.

According to a preferred embodiment of the present invention, in Formula (2),

$R_c$ and $R_d$ may each independently be selected from the group consisting of a phenyl group, a naphthyl group, or those indicated below:

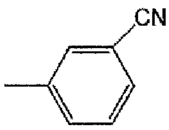 , 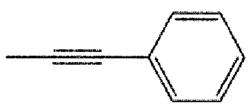 , 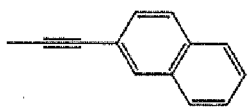 , 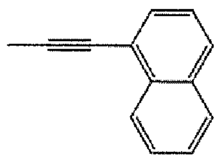

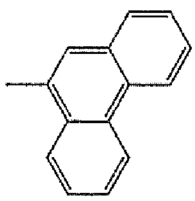 , 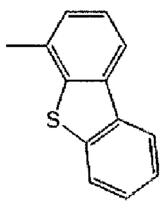 , 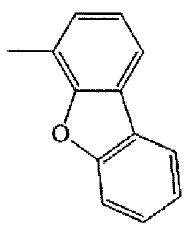

X may represent an alkylene group with 1-4 carbon atoms, preferably an alkylene group with 1-3 carbon atoms, and more preferably an alkylene group with 2 carbon atoms, and
c and d may each independently represent an integer from 0 to 5, more preferably an integer from 1 to 5, still more preferably an integer from 1 to 3, and yet still more preferably 1.

<Structural unit represented by Formula (3)>

In one embodiment of the present invention, the compounding agent having a naphthalene structure and/or a fluorene structure may be a compound containing a structural unit represented by General formula (3) below.

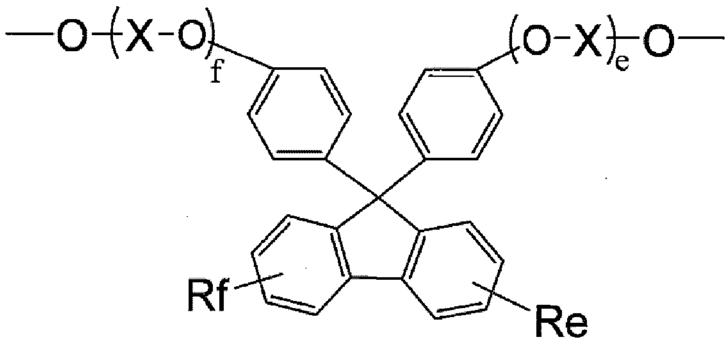

(3)

(In Formula (3),

$R_e$ and $R_f$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
e and f each independently represent an integer from 0 to 10).

According to a preferred embodiment of the present invention, in Formula (3),
$R_e$ and $R_f$ each independently represent a hydrogen atom, a fluorine atom, a chlorine atom, a bromine atom, an iodine atom, an alkyl group with 1-10 carbon atoms, or an aryl group with 6-18 carbon atoms, alkenyl group with 2-15 carbon atoms, alkoxy group with 1-5 carbon atoms, or aralkyl group with 7-17 carbon atoms which may contain a heteroatom selected from O, N and S.

In Formula (3), the alkyl group may more preferably be an alkyl group with 1-6 carbon atoms, and still more preferably methyl.

In Formula (3), the aryl group may more preferably be an aryl group with 6-16 carbon atoms, still more preferably an aryl group with 6-14 carbon atoms, yet still more preferably an aryl group with 6-12 carbon atoms, and more preferably an aryl group with 6-10 carbon atoms.

In Formula (3), the alkenyl group may more preferably be an alkenyl group with 2-10 carbon atoms.

In Formula (3), the alkoxy group may more preferably be an alkoxy group with 1-3 carbon atoms.

In Formula (3), the aralkyl group may more preferably be an aralkyl group with 7-10 carbon atoms.

In Formula (3), X may more preferably be an alkylene group with 1-4 carbon atoms, still more preferably an alkylene group with 1-3 carbon atoms, and yet still more preferably an alkylene group with 2 carbon atoms.

In Formula (3), e and f, each independently, may more preferably be an integer from 0 to 5, still more preferably an integer from 1 to 5, yet still more preferably an integer from 1 to 3, and more preferably 1.

Aspect of compounding agent

In one embodiment of the present invention, the compounding agent having a naphthalene structure and/or a fluorene structure may be one or more selected from the group consisting of a diol monomer having a structural unit represented by any of General formulae (1) to (3), and a polycarbonate oligomer containing a structural unit represented by any of General formulae (1) to (3) as a diol structure. A compound containing a structural unit represented by any of General formulae (1)-(3) may be used alone or in combination of two or more.

<Diol monomer>

In one embodiment of the present invention, the compounding agent having a naphthalene structure and/or a fluorene structure may be a diol monomer represented by any of General formulae (1)-(3), where one kind or two or more kinds of diol monomers may be used alone or in combination.

<Polycarbonate oligomer>

In one embodiment of the present invention, the compounding agent having a naphthalene structure and/or a fluorene structure may be a polycarbonate oligomer which contains a structural unit represented by any of General formulae (1) to (3) as a diol structure, where one kind or two or more kinds of polycarbonate oligomers may be used alone or in combination.

In a preferred embodiment of the present invention, the polycarbonate oligomer containing a structural unit represented by any of Formulae (1) to (3) as a diol structure may be represented by any of the following formulae. In General formulae (1) to (3), $R_a$, $R_b$, $R_c$, $R_a$, $R_e$, $R_f$, a, b, c, d, e, and f are the same as those described in <1>.

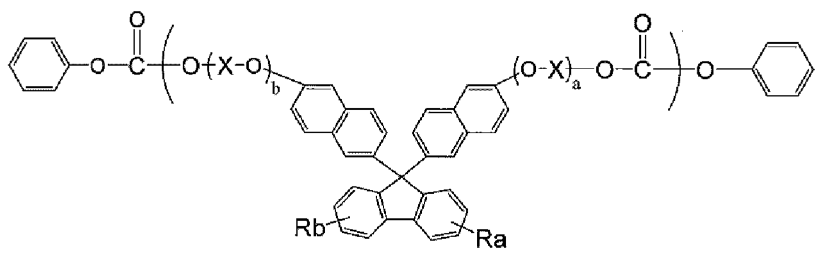

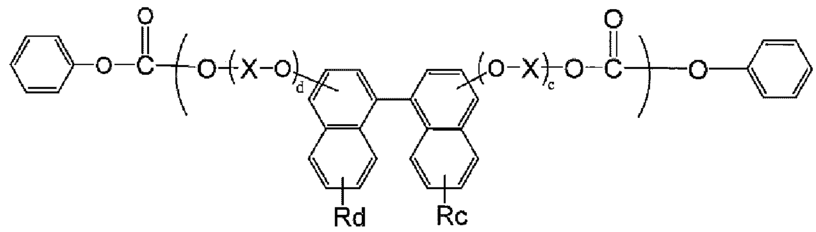

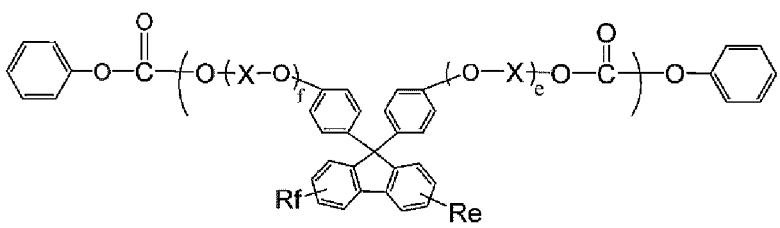

In one embodiment of the present invention, the polycarbonate oligomer may have 1-6, preferably 1-3, and more preferably 3 repeating units.

Method for producing polycarbonate oligomer compounding agent

A polycarbonate oligomer can be obtained by a transesterification process, for example, by mixing a diol with an excess amount of bisaryl carbonate to allow reaction under reduced pressure at a high temperature in the presence of a transesterification catalyst. The molar ratio of diol to bisaryl carbonate is preferably diol:bisaryl carbonate = 1:1.3-10, and more preferably 1:1.5-5. Polycarbonate oligomers do not have a constant number of repeating units, but they are aggregates of molecular chains having different number of repeating units, and are mixtures that may contain unreacted bisaryl carbonates and diols.

Physical properties of compounding agent

(1) 5% Thermal mass reduction onset temperature (5% thermal mass reduction temperature)

In one embodiment of the present invention, the above compounding agent may have 5% thermal mass reduction onset temperature (5% thermal mass reduction temperature) of 260°C or higher, preferably 280°C or higher, and more preferably 300°C or higher. The 5% thermal mass reduction onset temperature (5% thermal mass reduction temperature) refers to the temperature at which the weight of the substance decreases by 5% when measured using a simultaneous thermogravimetry/differential thermal analyzer (TG/TDA). According to the present invention, sufficient heat resistance can be achieved if the 5% thermal mass reduction onset temperature (5% thermal mass reduction temperature) of the compounding agent is within the above range.

(2) Mass average molecular weight

In one embodiment of the present invention, the mass average molecular weight of the above compounding agent, in case of an oligomer, may be less than 10,000, preferably 5,000 or less, and more preferably 3,000 or less. According to the present invention, a highly fluid resin can be obtained if the mass average molecular weight of the compounding agent is within the above range. The mass average molecular weight of the compounding agent can be measured by a conventional method. For example, the mass average molecular weight can be measured by gel permeation chromatography (GPC) and calculated in terms of standard polystyrene. Alternatively, if the compounding agent is an oligomer, the mass average molecular weight can be obtained by calculating the number of repeating units from the integration ratios of protons and carbons derived from the main backbone and the integration ratios of those derived from the terminal phenyl groups by $^{1}$H-NMR and $^{13}$C-NMR.

(3) Mass ratio of thermoplastic resin to compounding agent

In one embodiment of the present invention, the above compounding agent can be compounded such that the mass ratio of the thermoplastic resin to the compounding agent is polycarbonate thermoplastic resin:compounding agent = 99.9:0.1 to 70:30. The above mass ratio is preferably 99:1 to 70:30, more preferably 98:2 to 70:30, for example 99:1, 98:2, 97:3, 96:4, 95:5, 94:6, 93:7, 92:8, 91:9, 90:10, 85:15, 80:20, 75:25, 70:30, and so on. According to the present invention, a resin composition that is highly fluid and that has good formability can be provided if the mass ratio of the thermoplastic resin to the compounding agent is within the above range.

1-2. Thermoplastic resin

Examples of the thermoplastic resin that may be used for the resin composition of the present invention include, but are not limited to, a polycarbonate resin, a polyester resin, and a polyester carbonate resin. In one embodiment of the present invention, the thermoplastic resin may be selected from the group consisting of a polycarbonate resin, a polyester resin, and a polyester carbonate resin. In a preferred embodiment of the present invention, the thermoplastic resin may be a polycarbonate resin. In another preferred embodiment of the present invention, the thermoplastic resin may be a polyester resin. In yet another preferred embodiment of the present invention, the thermoplastic resin may be a polyester carbonate resin.

Physical properties of thermoplastic resin

(1) Refractive index

One of the characteristics of the thermoplastic resin of the present invention is the high refractive index. The refractive index (hereinafter, sometimes abbreviated as "nd") measured at a wavelength of 589 nm and 25°C is preferably 1.650-1.720, more preferably 1.660-1.710, and still more preferably 1.670-1.700.

(2) Glass transition temperature

One of the characteristics of the thermoplastic resin of the present invention is the high heat resistance. The glass transition temperature (hereinafter sometimes abbreviated as "Tg") is preferably 120-160°C, and more preferably 130-155°C.

(3) Polystyrene-equivalent molecular weight (Mw)

In one embodiment of the present invention, the thermoplastic resin may have a polystyrene-equivalent molecular weight (Mw) of 10,000-100,000, preferably 15,000-70,000, and more preferably 20,000-50,000.

Composition of thermoplastic resin

In one embodiment of the present invention, the thermoplastic resin may contain one or more structural units derived from compounds represented by General formulae (a)-(e) below. According to the present invention, the thermoplastic resin may contain one kind or two or more kinds of structural units derived from the compounds represented by General formulae (a)-(e) below alone or in combination.

<Structural unit derived from compound represented by General formula (a)>

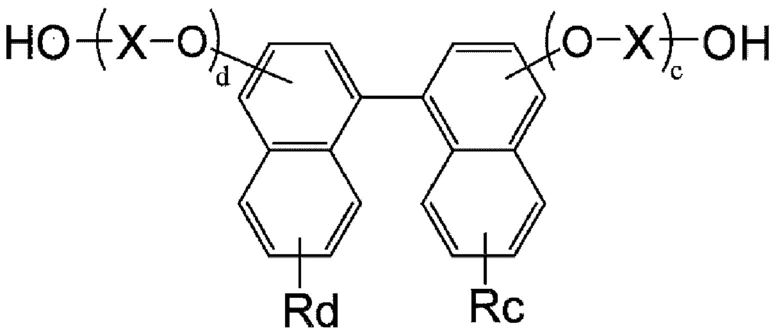

(a)

(In Formula (a),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$,
$R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10).

In a preferred embodiment of the present invention, in Formula (a), $R_c$ and $R_d$ are each independently selected from an aryl group with 6-20 carbon atoms, a heteroaryl group with 6-20 carbon atoms or aryloxy group with 6-20 carbon atoms which contains one or more heteroatoms selected from O, N and S, and -C≡C-$R_h$, and $R_h$ represents an aryl group with 6-20 carbon atoms or a heteroaryl group with 6-20 carbon atoms containing one or more heteroatoms selected from O, N and S.
In Formula (a), the aryl group more preferably has 6-18 carbon atoms, still more preferably 6-16 carbon atoms, yet still more preferably 6-14 carbon atoms, still more preferably 6-12 carbon atoms, and more preferably 6-10 carbon atoms.
In Formula (a), the heteroaryl group more preferably has 6-18 carbon atoms, still more preferably 8-16 carbon atoms, and yet still more preferably 10-14 carbon atoms.
In Formula (a), the aryloxy group more preferably has 6-18 carbon atoms, still more preferably 6-16 carbon atoms, and yet still more preferably 6-14 carbon atoms.
In Formula (a), X may more preferably be an alkylene group with 1-4 carbon atoms, still more preferably an alkylene group with 1-3 carbon atoms, and yet still more preferably an alkylene group with 2 carbon atoms.
In Formula (a), c and d, each independently, may more preferably be an integer from 0 to 5, still more preferably an integer from 1 to 5, yet still more preferably an integer from 1 to 3, and more preferably 1.
According to a preferred embodiment of the present invention, in Formula (a),

$R_c$ and $R_d$ may each independently be selected from the group consisting of a phenyl group, a naphthyl group, or those indicated below:

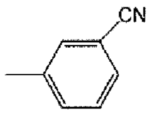 , 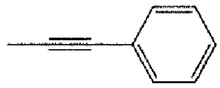 , 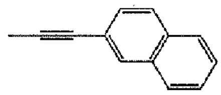 , 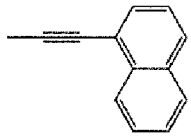

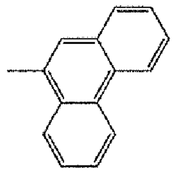 , 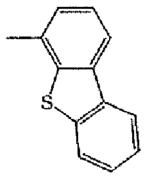 , 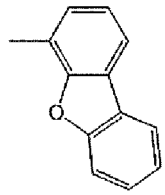

X may represent an alkylene group with 1-4 carbon atoms, preferably an alkylene group with 1-3 carbon atoms, and more preferably an alkylene group with 2 carbon atoms, and

c and d may each independently represent an integer from 0 to 5, more preferably an integer from 1 to 5, still more preferably an integer from 1 to 3, and yet still more preferably 1.

When the thermoplastic resin of the present invention contains a structural unit derived from the compound represented by General formula (a), the thermoplastic resin is a polycarbonate resin, a polyester carbonate resin, or a polyester resin.

<Structural unit derived from compound represented by General formula (b)>

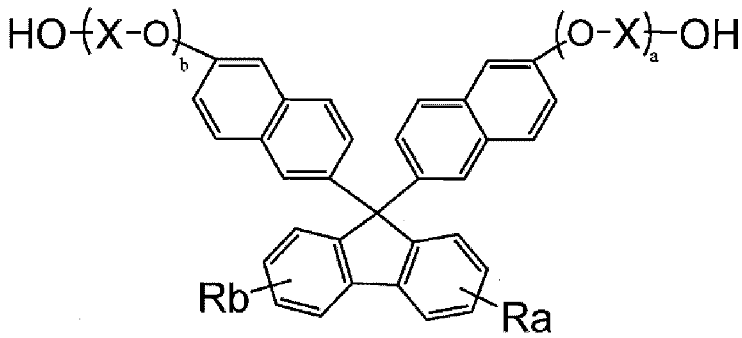

(b)

(In Formula (b),

$R_a$ and $R_b$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,

X represents a saturated carbon group with 1-5 carbon atoms, and

a and b each independently represent an integer from 0 to 10).

According to a preferred embodiment of the present invention, in Formula (b),
$R_a$ and $R_b$ each independently represent a hydrogen atom, a fluorine atom, a chlorine atom, a bromine atom, an iodine atom, an alkyl group with 1-10 carbon atoms, or an aryl group with 6-18 carbon atoms, alkenyl group with 2-15 carbon atoms, alkoxy group with 1-5 carbon atoms, or aralkyl group with 7-17 carbon atoms which may contain a heteroatom selected from O, N and S.

In Formula (b), the alkyl group may more preferably be an alkyl group with 1-6 carbon atoms, and still more preferably methyl.

In Formula (b), the aryl group may more preferably be an aryl group with 6-16 carbon atoms, still more preferably 6-14 carbon atoms, yet still more preferably 6-12 carbon atoms, and more preferably 6-10 carbon atoms.
In Formula (b), the alkenyl group may more preferably be an alkenyl group with 2-10 carbon atoms.
In Formula (b), the alkoxy group may more preferably be an alkoxy group with 1-3 carbon atoms.
In Formula (b), the aralkyl group may more preferably be an aralkyl group with 7-10 carbon atoms.
In Formula (b), X may more preferably be an alkylene group with 1-4 carbon atoms, still more preferably an alkylene group with 1-3 carbon atoms, and yet still more preferably an alkylene group with 2 carbon atoms.
In Formula (b), a and b, each independently, may more preferably be an integer from 0 to 5, still more preferably an integer from 1 to 5, yet still more preferably an integer from 1 to 3, and more preferably 1.
When the thermoplastic resin of the present invention contains a structural unit derived from the compound represented by General formula (b), the thermoplastic resin is a polycarbonate resin, a polyester carbonate resin, or a polyester resin.

<Structural unit derived from compound represented by General formula (c)>

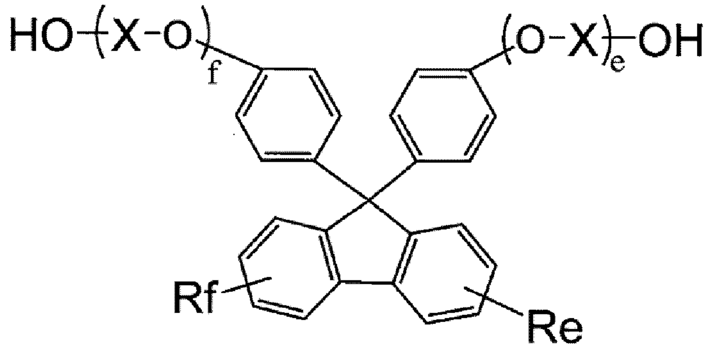

(c)

(In Formula (c),

$R_e$ and $R_f$ each independently represent a hydrogen atom, a fluorine atom, a chlorine atom, a bromine atom, an iodine atom, an alkyl group with 1-6 carbon atoms, or an aryl group with 6-20 carbon atoms, alkenyl group with 2-6 carbon atoms, alkoxy group with 1-6 carbon atoms, or aralkyl group with 7-17 carbon atoms which may contain a heteroatom selected from O, N and S,
X represents a saturated carbon group with 1-5 carbon atoms, and
e and f each independently represent an integer from 0 to 10).

According to a preferred embodiment of the present invention, in Formula (c),
$R_e$ and $R_f$ each independently represent a hydrogen atom, a fluorine atom, a chlorine atom, a bromine atom, an iodine atom, an alkyl group with 1-10 carbon atoms, or an aryl group with 6-18 carbon atoms, alkenyl group with 2-15 carbon atoms, alkoxy group with 1-5 carbon atoms, or aralkyl group with 7-17 carbon atoms which may contain a heteroatom selected from O, N and S.
In Formula (c), the alkyl group may more preferably be an alkyl group with 1-6 carbon atoms, and still more preferably methyl.
In Formula (c), the aryl group may more preferably be an aryl group with 6-16 carbon atoms, still more preferably an aryl group with 6-14 carbon atoms, yet still more preferably an aryl group with 6-12 carbon atoms, and more preferably an aryl group with 6-10 carbon atoms.
In Formula (c), the alkenyl group may more preferably be an alkenyl group with 2-10 carbon atoms.
In Formula (c), the alkoxy group may more preferably be an alkoxy group with 1-3 carbon atoms.
In Formula (c), the aralkyl group may more preferably be an aralkyl group with 7-10 carbon atoms.
In Formula (c), X may more preferably be an alkylene group with 1-4 carbon atoms, yet still more preferably an alkylene group with 1-3 carbon atoms, and more preferably an alkylene group with 2 carbon atoms.
In Formula (c), e and f, each independently, may more preferably be an integer from 0 to 5, still more preferably an integer from 1 to 5, yet still more preferably an integer from 1 to 3, and more preferably 1.
When the thermoplastic resin of the present invention contains a structural unit derived from the compound represented by General formula (c), the thermoplastic resin is a polycarbonate resin, a polyester carbonate resin, or a

polyester resin.

<Structural unit derived from compound represented by General formula (d)>

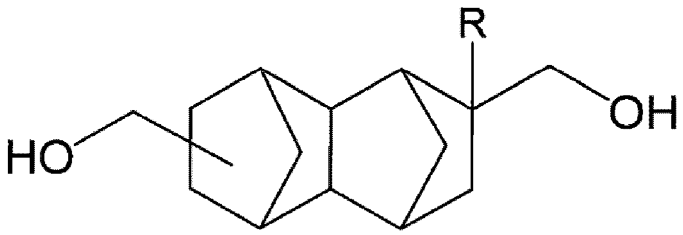

(d)

(In General formula (d), R represents a hydrogen atom, a methyl group, or an ethyl group).

In a preferred embodiment of the present invention, R in Formula (d) represents a hydrogen atom.

When the thermoplastic resin of the present invention contains a structural unit derived from the compound represented by General formula (d), the thermoplastic resin is a polycarbonate resin, a polyester carbonate resin, or a polyester resin.

<Structural unit represented by General formula (e)>

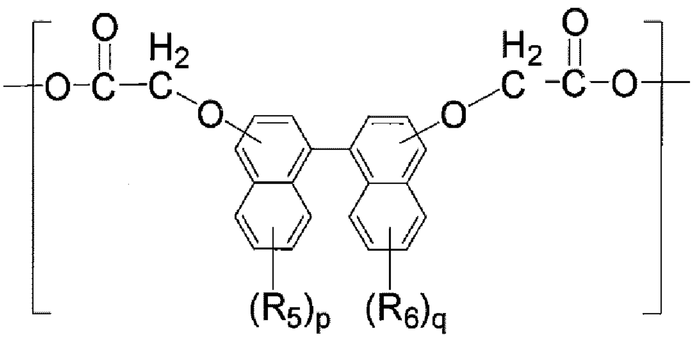

(e)

(In Formula (e),

$R_5$ and $R_6$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$,

$R_h$ represents an aryl group with 6-20 carbon atoms or a heteroaryl group with 6-20 carbon atoms containing one or more heteroatoms selected from O, N and S, and

p and q each independently represent an integer from 0 to 10).

According to a preferred embodiment of the present invention, in Formula (e),
$R_5$ and $R_6$ are each independently selected from an aryl group with 6-20 carbon atoms, a heteroaryl group with 6-20 carbon atoms or aryloxy group with 6-20 carbon atoms which contains one or more heteroatoms selected from O, N and S, and -C≡C-$R_h$, and $R_h$ represents an aryl group with 6-20 carbon atoms or a heteroaryl group with 6-20 carbon atoms containing one or more heteroatoms selected from O, N and S.

In Formula (e), the aryl group more preferably has 6-18 carbon atoms, still more preferably 6-16 carbon atoms, yet still more preferably 6-14 carbon atoms, more preferably 6-12 carbon atoms, and still more preferably 6-10 carbon atoms.

In Formula (e), the heteroaryl group more preferably has 6-18 carbon atoms, still more preferably 8-16 carbon atoms, and yet still more preferably 10-14 carbon atoms.

In Formula (e), the aryloxy group more preferably has 6-18 carbon atoms, still more preferably 6-16 carbon atoms, and yet still more preferably 6-14 carbon atoms.

In Formula (e), p and q, each independently, may preferably be an integer from 0 to 5, and more preferably an integer from 0 to 1.

According to a more preferred embodiment of the present invention, in Formula (e),
$R_5$ and $R_6$ may each independently be selected from the group consisting of a phenyl group, a naphthyl group, or those indicated below.

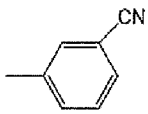 , 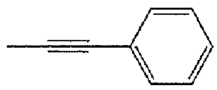 , 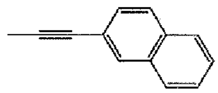 , 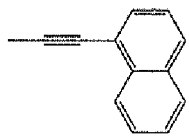

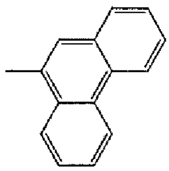 , 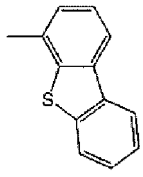 , 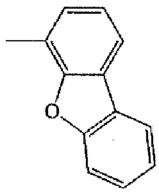

The structural unit represented by formula (e) is preferably derived from 2,2'-bis(hydroxycarbonylmethoxy)- 1, l'-binaphthyl or from a compound represented by any of the following structural formulae, and it is particularly preferably derived from 2,2'-bis(hydroxycarbonylmethoxy)-1,1'-binaphthyl.

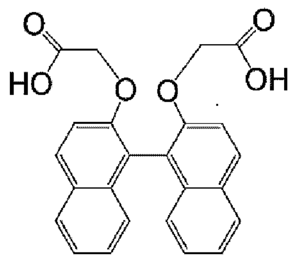 , 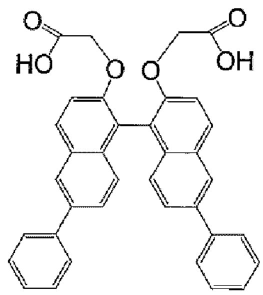

When the thermoplastic resin of the present invention contains a structural unit derived from a compound represented by General formula (e), the thermoplastic resin is a polyester resin or a polyester carbonate resin.

<Polycarbonate resin>

The polycarbonate resin used for the thermoplastic resin of the present invention may contain one or more structural units derived from the compounds represented by General formulae (a)-(d) above as a diol component. According to the present invention, the polycarbonate resin may contain one kind or two or more kinds of the structural units derived from the compounds represented by General formulae (a)-(d) above alone or in combination. The polycarbonate resin used for the resin composition of the present invention can contain other diol component as its structural unit. The structural units derived from the compounds represented by General formulae (a) to (d) are the same as those described above.

In one embodiment of the present invention, the diol component may be derived from a compound represented by General formula (a) above. In one embodiment of the present invention, the diol component may be derived from a compound represented by General formula (b) above. In one embodiment of the present invention, the diol component may be derived from a compound represented by General formula (c) above. In one embodiment of the present invention, the diol component may be derived from a compound represented by General formula (d) above.

<Method for producing polycarbonate resin>

A polycarbonate resin can be produced by a conventional method.

In a phosgene method, a diol is reacted with phosgene in the presence of a general acid-binding agent and a solvent. For example, pyridine, an alkali metal hydroxide such as sodium hydroxide or potassium hydroxide, or the like may be used as the acid-binding agent, while methylene chloride, chloroform, or the like may be used as the solvent. In addition, it is preferable to use a catalyst, for example, a tertiary amine such as triethylamine or a quaternary ammonium salt such as benzyltriethylammonium chloride to promote the condensation polymerization reaction. It is preferable to further add a monofunctional group compound such as phenol, p-t-butylphenol, p-cumylphenol, or an alkyl-substituted phenol as a molecular weight regulator to adjust the degree of polymerization. Furthermore, an antioxidant such as sodium sulfite or hydrosulfite, and a branching agent such as phloroglucin or isatin bisphenol may also be added in small amounts as necessary. The reaction temperature is usually in a range of 0-150°C, and preferably in a range of 5-40°C. The reaction time depends on the reaction temperature, but it is usually 0.5 minutes to 10 hours, and preferably 1 minute to 2 hours. The pH of the reaction system is desirably kept at 10 or higher during the reaction.

Alternatively, in a transesterification method, diol and bisaryl carbonate are mixed and reacted under reduced pressure at a high temperature. Examples of the bisaryl carbonate include diphenyl carbonate, di-p-tolyl carbonate, phenyl-p-tolyl carbonate, di-p-chlorophenyl carbonate, and dinaphthyl carbonate. One kind or two or more kinds of these compounds can be used alone or in combination. The reaction is usually carried out at a temperature in a range of 150-350°C, preferably in a range of 200-300°C. The degree of pressure reduction is set such that the final degree of pressure reduction is preferably kept below or equal to 1 mmHg to allow phenols derived from the bisaryl carbonate generated by the transesterification reaction to be distilled away from the system. The reaction time depends on the reaction temperature and the degree of pressure reduction, but is usually around 1-24 hours. The reaction is preferably carried out in an inert gas atmosphere such as nitrogen or argon.

The content of the dicarboxylic acid chloride, phosgene, or biaryl carbonate component is preferably less than 42 mol%, more preferably less than 30 mol%, and still more preferably less than 20 mol% relative to 100 mol% dicarboxylic acid component.

<Polyester resin>

The polyester resin used for the resin composition of the present invention may contain a structural unit represented by General formula (e) above as a carboxylic acid diester component. The structural unit represented by General formula (e) is the same as that described above. The polyester resin used for the resin composition of the present invention can use any diol component as a structural unit thereof.

In the polyester resin used for the resin composition of the present invention, the diol component may be, for example, but not limited to, a bisphenol, a binaphthol, or the like. In one embodiment of the present invention, the polyester resin used for the resin composition of the present invention may contain one or more structural units derived from the compounds represented by General formulae (a) to (d) above as a diol component. According to the present invention, the polyester resin may contain one kind or two or more kinds of the structural units derived from the compounds represented by General formulae (a) to (d) above alone or in combination. The polyester resin used for the resin composition of the present invention can further contain other diol component as its structural unit. The structural units derived from the compounds represented by General formulae (a) to (d) are the same as those described above.

In one embodiment of the present invention, the diol component may be derived from a compound represented by General formula (a) above. In one embodiment of the present invention, the diol component may be derived from a compound represented by General formula (b) above. In one embodiment of the present invention, the diol component may be derived from a compound represented by General formula (c) above. In one embodiment of the present invention, the diol component may be derived from a compound represented by General formula (d) above.

The polyester resin used for the resin composition of the present invention may contain, as (an)other polymerization component(s), an additional dicarboxylic acid component other than the structural unit represented by General formula (e) above, and/or an additional diol component other than the structural units derived from the compounds represented by General formulae (a) to (d) above.

In one embodiment of the present invention, examples of the additional dicarboxylic acid component that may be used for the polyester resin include: aliphatic dicarboxylic acid components such as malonic acid, succinic acid, glutaric acid, adipic acid, pimelic acid, suberic acid, azelaic acid, methyl malonic acid, and ethyl malonic acid; monocyclic aromatic dicarboxylic acid components such as phthalic acid, isophthalic acid, and terephthalic acid; polycyclic aromatic dicarboxylic acid components such as 2,7-naphthalene dicarboxylic acid, 2,3-naphthalene dicarboxylic acid, 1,4-naphthalene dicarboxylic acid, 1,8-naphthalene dicarboxylic acid, anthracene dicarboxylic acid, and phenanthrene dicarboxylic acid; biphenyl dicarboxylic acid components such as 2,2'-biphenyldicarboxylic acid; and alicyclic dicarboxylic acid components such as 1,4-cyclodicarboxylic acid, and 2,6-decalin dicarboxylic acid. These may be used alone or in combination of two or more. Acid chlorides and esters may also be used as a derivative thereof. Among these, a monocyclic aromatic dicarboxylic acid component, a polycyclic aromatic dicarboxylic acid component, or a biphenyldicarboxylic acid component is preferable because they can readily increase the heat resistance and the refractive index.

In one embodiment of the present invention, examples of the additional diol component that may be used for the polyester resin include: aliphatic diol components such as ethylene glycol, propanediol, butanediol, pentanediol, hexanediol, heptanediol, octanediol, and nonanediol; alicyclic diol components such as tricyclo[5.2.1.02,6]decanedimethanol, cyclohexane-1,4-dimethanol, decalin-2,6-dimethanol, norbornane dimethanol, pentacyclopentadecane dimethanol, cyclopentane-1,3-dimethanol, spiroglycol, and isosorbide; and aromatic diol components such as hydroquinone, resorcinol, 2,2-bis(4-hydroxyphenyl)propane, 2,2-bis(3-methyl-4-hydroxyphenyl)propane, 1,1-bis(4-hydroxyphenyl)-1-phenylethane, bis(4-hydroxyphenyl)diphenylmethane, 1,3-bis(2-(4-hydroxyphenyl)-2-propyl)benzene, bis(4-hydroxyphenyl)sulfone, bis(4-(2-hydroxyethoxy)phenyl)sulfone, bis(4-hydroxyphenyl)sulfide, 1,1-bis(4-hydroxyphenyl)-3,3,5-trimethylcyclohexane, 1,1-bis(4-hydroxyphenyl)cyclohexane, biphenol, 2,2'-bis(2-hydroxyethoxy)-1,1'-binaphthyl, 1,1'-bi-2-naphthol, dihydroxynaphthalene, bis(2-hydroxyethoxy)naphthalene, and 10,10-bis(4-hydroxyphenyl)anthrone. These may be used alone or in combination of two or more. Among these, ethylene glycol and 2,2'-bis(2-hydroxyethoxy)-1,1'-binaphthyl are preferable because they can readily suppress reduction of heat resistance and refractive index while enhancing the formability.

<Method for producing polyester resin>

A polyester resin can be produced by a conventional method.
The polyester resin used for the resin composition of the present invention may be a high-molecular-weight body having a desired molecular weight, which can be obtained by esterification or transesterification reaction of dicarboxylic acid and a diol compound, followed by polycondensation reaction of the obtained reaction product.
Specifically, for example, a diol component is preferably mixed with a dicarboxylic acid component or a diester thereof in the presence of inert gas to allow reaction under reduced pressure, usually at 120-350°C, preferably at 150-300°C. The degree of pressure reduction is changed stepwise to a final pressure of 0.13 kPa or below to distill the generated water or alcohols away from the system. The reaction time is usually 1-10 hours.
As a polymerization catalyst, any known catalyst can be employed, where, for example, an antimony compound, a titanium compound, a germanium compound, a tin compound, or an aluminum compound is preferable. Examples of such compounds include oxides, acetates, carboxylates, hydrides, alcoholates, halides, carbonates, and sulfates of antimony, titanium, germanium, tin, and aluminum. These compounds can be used in combination of two or more. Among these compounds, tin, titanium, and germanium compounds are preferred from the viewpoints of melt stability and color hue of the thermoplastic resin.
As a transesterification catalyst, any known catalyst can be employed, where, for example, a compound containing a manganese, magnesium, titanium, zinc, aluminum, calcium, cobalt, sodium, lithium, or lead element can be used. Specifically, examples include oxides, acetates, carboxylates, hydrides, alcoholates, halides, carbonates, and sulfates containing these elements. Among these, compounds such as oxides, acetates, and alcoholates of manganese, magnesium, zinc, titanium, and cobalt are preferred from the viewpoints of melt stability and color hue of the thermoplastic resin and from the viewpoint of having less polymer-insoluble foreign substances in the thermoplastic resin. Furthermore, manganese, magnesium and titanium compounds are preferable. Two or more kinds of these compounds can be used in combination.
As described above, the polyester resin of the present invention may contain, as a copolymerization component, an additional dicarboxylic acid component other than the structural unit represented by Formula (e) above, and/or an additional diol component other than the structural units derived from the compounds represented by General formulae (a) to (d) above.

<Polyester carbonate resin>

The polyester carbonate resin used for the thermoplastic resin of the present invention may contain one or more structural units derived from the compounds represented by General formulae (a)-(d) above and/or a structural unit represented by General formula (e) above. According to the present invention, the polyester carbonate resin may contain one kind or two or more kinds of the structural units derived from the compounds represented by General formulae (a)-(d) above alone or in combination. According to the present invention, the polyester carbonate resin may contain, as a dicarboxylic acid component, a structural unit represented by Formula (e) above. The structural units derived from the compounds represented by General formulae (a)-(d) and the structural unit represented by General formula (e) are the same as those described above.
In one embodiment of the present invention, the diol component may be derived from a compound represented by General formula (a) above. In one embodiment of the present invention, the diol component may be derived from a compound represented by General formula (b) above. In one embodiment of the present invention, the diol component may be derived from a compound represented by General formula (c) above. In one embodiment of the present invention, the diol component may be derived from a compound represented by General formula (d) above. The polyester carbonate

resin used for the resin composition of the present invention may contain, as its structural units, an additional diol component other than the structural units derived from the compounds represented by General formulae (a) to (d) and a dicarboxylic acid component other than the structural unit derived from the compound represented by General formula (e).

<Method for producing polyester carbonate resin>

A polyester carbonate resin can be produced by a conventional method.

The polyester carbonate resin used for the resin composition of the present invention can be produced by combining esterification reaction or transesterification reaction between dicarboxylic acid and a diol compound with a phosgene method in which dicarboxylic acid chloride and phosgene are reacted or with a transesterification method in which diol, dicarboxylic acid, and biaryl carbonate are reacted. The esterification reaction and transesterification reaction as well as the phosgene method and transesterification method are the same as those described above.

<Additives>

Additives such as a heat stabilizer, an antioxidant, a mold release agent, a plasticizer, a filler, a UV absorber, an anti-rust agent, a dispersant, a defoaming agent, a leveling agent, and the like can be added to the thermoplastic resin of the present invention as necessary for the use as a thermoplastic resin composition.

As a mold release agent, it is preferable that at least 90 wt% of the mold release agent consists of an ester of an alcohol and a fatty acid. Specifically, examples of an ester of an alcohol and a fatty acid include esters of a monovalent alcohol and a fatty acid and/or partial or total esters of a polyhydric alcohol and a fatty acid. The aforementioned ester of a monovalent alcohol and a fatty acid is preferably an ester of a monovalent alcohol with 1 to 20 carbon atoms and a saturated fatty acid with 10 to 30 carbon atoms. The partial or total ester of a polyhydric alcohol and a fatty acid is preferably a partial or total ester of a polyhydric alcohol with 1 to 25 carbon atoms and a saturated fatty acid with 10 to 30 carbon atoms. Specifically, examples of the ester of a monohydric alcohol and a saturated fatty acid include stearyl stearate, palmityl palmitate, butyl stearate, methyl laurate, and isopropyl palmitate, where stearyl stearate is favorable.

Specifically, examples of the partial or total ester of a polyhydric alcohol and a saturated fatty acid include total esters or partial esters of glycerol monostearate, glycerol distearate, glycerol tristearate, monosorbitate stearate, glycerol monobehenate, pentaerythritol monostearate, pentaerythritol tetrastearate, pentaerythritol tetraperagonate, propylene glycol monostearate, biphenyl biphenate, sorbitan monostearate, 2-ethylhexyl stearate, and dipentaerythritol such as dipentaerythritol hexasterate. Among these esters, glycerol monostearate, glycerol tristearate, pentaerythritol tetrastearate, and a mixture of glycerol tristearate and stearyl stearate are preferably used.

The amount of the above ester in the mold release agent is preferably 90 wt% or more, and more preferably 95 wt% or more relative to 100 wt% mold release agent.

The amount of the mold release agent added to the thermoplastic resin composition is preferably in a range of 0.005-2.0 parts by weight, more preferably in a range of 0.01-0.6 parts by weight, and still more preferably in a range of 0.02-0.5 parts by weight per 100 parts by weight of the thermoplastic resin.

Examples of the heat stabilizer include phosphorus-based heat stabilizers, sulfur-based heat stabilizers, and hindered phenol-based heat stabilizers.

In the phosphorus-based heat stabilizer, tetrakis(2,4-di-tert-butylphenyl)-4,4'-biphenylenediphosphonite is preferably used.

The content of the phosphorus-based heat stabilizer in the thermoplastic resin is preferably 0.001-0.2 parts by weight per 100 parts by weight of the thermoplastic resin.

Among the hindered phenol-based heat stabilizers, octadecyl-3-(3,5-di-tert-butyl-4-hydroxyphenyl)propionate is particularly preferably used.

The content of the hindered phenol-based heat stabilizer in the thermoplastic resin is preferably 0.001-0.3 parts by weight per 100 parts by weight of the thermoplastic resin.

The UV absorber is preferably of at least one kind selected from the group consisting of benzotriazole-based UV absorbers, benzophenone-based UV absorbers, triazine-based UV absorbers, cyclic imino ester-based UV absorbers, and cyanoacrylate-based UV absorbers.

Among the benzotriazole-based UV absorbers, 2-(2-hydroxy-5-tert-octylphenyl)benzotriazole, and 2,2'-methylenebis[4-(1,1,3,3-tetramethylbutyl)-6-(2H-benzotriazole-2-yl)phenol] are more preferable. Examples of the benzophenone-based UV absorber include 2-hydroxy-4-n-dodecyloxybenzophenone and 2-hydroxy-4-methoxy-2'-carboxybenzophenone. Examples of the triazine-based UV absorber include 2-(4,6-diphenyl-1,3,5-triazine-2-yl)-5-[(hexyl)oxy]-phenol and 2-(4,6-bis(2.4-dimethylphenyl)-1,3,5-triazine-2-yl)-5-[(octyl)oxy]-phenol. As the cyclic imino ester-based UV absorber, 2,2'-p-phenylenebis(3,1-benzoxazin-4-one) is particularly preferable.

The amount of the UV absorber added is preferably 0.01-3.0 parts by weight per 100 parts by weight of the

thermoplastic resin, and within this range, it is possible to provide sufficient weather resistance to the formed thermoplastic resin product suitable for the application.

<Method for producing resin composition>

A resin composition can be produced by any known method. In one embodiment, a method for producing a resin composition includes a step of mixing a thermoplastic resin and a compounding agent. The method may further include a step of blending at least one of solvents and additives. For example, a resin composition can be produced by mixing a thermoplastic resin with a compounding agent and an additive, either sequentially or simultaneously. The mixing step can be carried out by a common process, for example, by a kneading process using an extruder, or by a method in which the resin and the compounding agent are each dissolved in a solvent (e.g., methylene chloride, THF, etc). to make an each solution respectively, and then the solutions are mixed together.

<Physical properties of resin composition>

The resin composition of the present invention has low Tg and thus is highly fluid. Therefore, the resin composition of the present invention can be used for injection molding. The physical properties of the resin composition will be described in detail in

EXAMPLES.

2. Molded product

The resin composition of the present invention can be used suitably for an optical material. In one embodiment of the present invention, an optical material containing the resin composition of the present invention is provided. In one embodiment of the present invention, the optical materials include, but are not limited to, an optical disc, a transparent conductive substrate, an optical card, a sheet, a film, an optical fiber, a lens, a prism, an optical membrane, a substrate, an optical filter, a hard coat membrane, and the like. The resin composition of the present invention is particularly favorable for manufacturing a thin optical material because its high fluidity allows forming by a cast molding method. In a preferred embodiment of the present invention, the optical material produced using the resin composition of the present invention may be an optical lens. In another preferred embodiment of the present invention, the optical material produced using the resin composition of the present invention may be an optical film.

In a case where an optical material containing the resin composition of the present invention is manufactured by injection molding, molding is preferably carried out under the conditions of a cylinder temperature of 260-350°C and a mold temperature of 90-170°C. More preferably, molding is carried out under the conditions of a cylinder temperature of 270-320°C and a mold temperature of 100-160°C. If the cylinder temperature is higher than 350°C, the resin composition will be decomposed and colored, and if the cylinder temperature is lower than 260°C, the melt viscosity will be high and molding tends to be difficult. If the mold temperature is higher than 170°C, removal of the molded pieces consisting of the resin composition from the mold will likely be difficult. On the other hand, if the mold temperature is below 90°C, the resin hardens too quickly in the mold during molding, making it difficult to control the shape of the molded piece, and also making it difficult to transfer the pattern of the mold sufficiently.

<Optical lens>

In one embodiment of the present invention, the resin composition can favorably be used for optical lenses. Since optical lenses manufactured using the resin composition of the present invention will have a high refractive index and excellent heat resistance, they are extremely useful for use in the fields that conventionally use expensive high-refractive-index glass lenses such as telescopes, binoculars, television projectors, and the like.

If necessary, an optical lens of the present invention can suitably be implemented in the form of an aspherical lens. Since spherical aberration can be reduced to virtually zero with a single aspherical lens, there is no need of combining multiple spherical lenses to remove spherical aberration, which enables reduction of weight and forming cost. Therefore, an aspherical lens is particularly useful as a camera lens among the optical lenses.

In addition, the optical lens of the present invention is particularly useful as a material for a thin, small, and complex-shaped optical lens because of its high fluidity upon forming. Specifically, lens sizes are such that the thickness at the center is preferably 0.05-3.0 mm, more preferably 0.05-2.0 mm, and still more preferably 0.1-2.0 mm. In addition, the diameter is preferably 1.0 mm-20.0 mm, more preferably 1.0-10.0 mm, and still more preferably 3.0-10.0 mm. The shape of the lens is preferably convex on one side and concave on the other side, i.e., a meniscus lens.

The optical lens of the present invention can be formed by any method such as mold forming, cutting, polishing,

laser machining, electrical discharge machining, etching, and the like. Among these methods, mold forming is more preferable in terms of manufacturing cost.

<Optical film>

In one embodiment of the present invention, the resin composition can favorably be used for optical films. Since optical films produced using the polycarbonate resin of the present invention have excellent transparency and heat resistance, they are suitable for use in LCD substrate films, optical memory cards, and other applications.

To avoid contamination of the optical film with foreign substance as much as possible, the forming environment obviously needs to be a low dust environment, preferably class 6 or better, and more preferably class 5 or better.

EXAMPLES

Hereinafter, examples of the present invention will be described along with comparative examples to illustrate the present invention in detail, but the present invention is not limited to these examples.

1) Glass transition temperature: The glass transition temperature (Tg) was measured with a differential thermal scanning calorimeter (DSC). The specific conditions were as follows.

Apparatus: DSC7000X from Hitachi High-Tech Science Corporation
Sample volume: 5 mg
Atmosphere: Nitrogen gas atmosphere
Heating conditions: 10°C/min

2) Melt volume flow rate (MVR) ($cm^3$/10 min): The melt volume flow rate was measured according to the method of ISO1133 under the conditions of 260°C and 2.16 kg load using melt indexer T-111 (Toyo Seiki Seisaku-sho, Ltd).
3) Refractive index (nd): The refractive index was measured for a 0.1 mm-thick film made of the polycarbonate resin produced in each example according to the method of JIS-K-7142 using an Abbe refractometer.
4) Abbe number (ν): The refractive indices of the 0.1mm-thick film made of the polycarbonate resin produced in each examples were measured at wavelengths of 486 nm, 589 nm, and 656 nm, at a temperature of 23°C using an Abbe refractometer to calculate the Abbe number using the following formula.

$$\nu = (nd - 1)/(nF - nC)$$

nd: Refractive index at wavelength of 589 nm
nC: Refractive index at wavelength of 656 nm
nF: Refractive index at wavelength of 486 nm

5) Mass average molecular weight (Mw)
The mass average molecular weights of the resins and resin compositions were determined by gel permeation chromatography (GPC) and calculated in terms of standard polystyrene. The apparatus, columns, and measurement conditions used were as follows.

·GPC apparatus: HLC-8420GPC, manufactured by Tosoh Corporation
·Columns:

TSKgel SuperHM-M × 3 columns, manufactured by Tosoh Corporation
TSKgel guardcolumn SuperH-H × 1 column, manufactured by Tosoh Corporation
TSKgel SuperH-RC × 1 column, manufactured by Tosoh Corporation

·Detector: RI detector
·Standard polystyrenes: Standard polystyrene kit PStQuick C, manufactured by Tosoh Corporation
·Sample solution: 0.2 mass% Tetrahydrofuran solution
·Eluent: Tetrahydrofuran
·Flow rate of eluent: 0.6 mL/min
·Column temperature: 40°C

6. Formability (fluidity): After vacuum drying the resin composition at 120°C for 4 hours, the resultant was subjected to injection molding to give a disk-shaped plate with a diameter of 50 mm and a thickness of 1.0 mm using an injection molding machine (FANUC ROBOSHOT α-S30iA) at a cylinder temperature of 270°C and a mold temperature of Tg-10°C, and the formability (fluidity) was visually evaluated.

Flow mark caused by molding (visual inspection) A: No flow mark
Flow mark caused by molding (visual inspection) B: Almost no flow mark
Flow mark caused by molding (visual inspection) C: A few flow marks
Flow mark caused by molding (visual inspection) D: Flow marks were present

7) Thermal weight reduction onset temperature (°C): Measurement was carried out using a simultaneous thermogravimetry/differential thermal analyzer (TG/DTA) (TGDTA7300, manufactured by Hitachi High-Tech Science Corporation).

The measurement sample was prepared by weighing 2 mg in a platinum pan (Pt open-type sample container φ5.2 H2.5 mm). Measurement was performed in a nitrogen atmosphere (nitrogen flow rate: 250 ml/min). In the reference cell, 0.00519 g of α-alumina was used as the reference material. The sample temperature was adjusted to 30°C, and the temperature was increased to 550°C at 10°C/min. The temperature at which the weight of the sample decreased by 5 mass% was defined as the "thermogravimetric reduction onset temperature.

(Resin production example 1)

Resin 1: EP8000

As raw materials, 13.000 kg (22.007 mol) of 9,9-bis(4-(2-hydroxyethoxy)-3-phenylphenyl)fluorene (BPPEF) having the following structure, 8.000 kg (21.365 mol) of 2,2'-bis(2-hydroxyethoxy)-1,1'-binaphthalene (BNE), 9.650 kg (45.048 mol) of DPC, and 2.21 $\times$ $10^{-2}$ g (2.63 $\times$ $10^{-4}$ mol) of sodium bicarbonate were placed in a 50 liter reactor equipped with a stirrer and a distillation unit, nitrogen purged, and then heated to 205°C over a period of 1 hour in a nitrogen atmosphere of 760 Torr, and stirred.

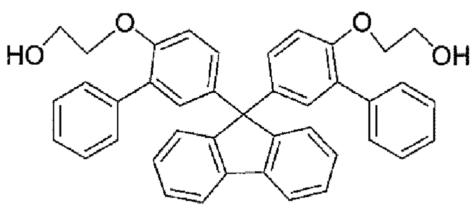
(BPPEF)

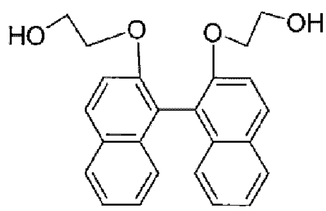
(BNE)

After the raw materials were completely dissolved, the pressure was reduced to 150 Torr over a 15-minute period, and the mixture was held under the conditions of 205°C and 150 Torr for 20 minutes to allow transesterification reaction. The temperature was further increased to 240°C at a rate of 37.5°C/hr and kept at 240°C and 150 Torr for 10 minutes. The pressure was then adjusted to 120 Torr over a 10-minute period and kept at 240°C and 120 Torr for 70 minutes. The pressure was then adjusted to 100 Torr over a 10-minute period and kept at 240°C and 100 Torr for 10 minutes. The pressure was further reduced to 1 Torr or lower over a 40-minute period to allow polymerization reaction while stirring for 10 minutes under the conditions of 240°C and 1 Torr. After the reaction was completed, nitrogen was blown into the reactor to apply pressure, and the generated polycarbonate resin was taken out while pelletizing to obtain Resin 1.

(Resin production example 2)

Resin 2: EP10000

A polycarbonate resin (Resin 2) was obtained in the same manner as Production example 1 except that the raw materials in Production example 1 were changed to 14.978 kg (40.000 mol) of 2,2'-bis(2-hydroxyethoxy)-1,1'-binaphthalene (BNE), 24.239 kg (45.000 mol) of 9,9-bis[6-(2-hydroxyethoxy)naphthalene-2-yl]fluorene (BNEF), 7.899 kg (15.000 mol) of DPBHBNA, 22.236 kg (103.800 mol) of DPC, and 5.09 $\times$ $10^{-2}$ g (6.06 $\times$ $10^{-4}$ mol) of sodium bicarbonate.

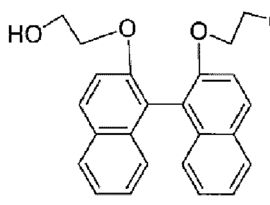

(BNE)

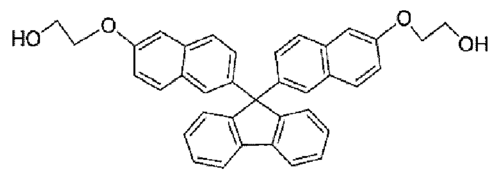

(BNEF)

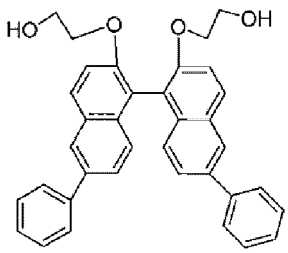

(DPBHBNA)

(Resin production example 3)

Resin 3: EP6000

A polycarbonate resin (Resin 3) was obtained in the same manner as Production example 1 except that the raw materials in Production example 1 were changed to 19.260 kg (43.921 mol) of 9,9-bis(4-(2-hydroxyethoxy)phenyl)fluorene (BPEF), 9.780 kg (45.655 mol) of diphenyl carbonate (DPC), and 2.21 $\times$ $10^{-2}$ g (2.63 $\times$ $10^{-4}$ mol) of sodium dicarbonate.

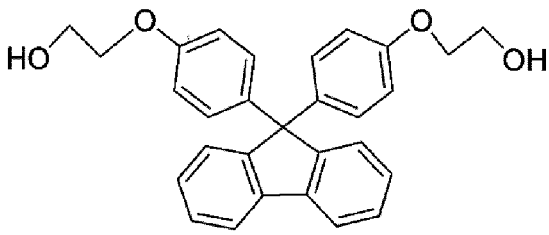

(BPEF)

(Resin production example 4)

Resin 4: EP3500

23.50 kg (105.70 mol) of decahydro-1,4:5,8-dimethanonaphthalene-2,6(7)-dimethanol (D-NDM) represented by Structural formula (a) below, 22.98 kg (107.27 mol) of DPC, and 130.00 mg (1.5 $\times$ $10^{-3}$ mol) of sodium bicarbonate were placed in a 50 L reactor equipped with a stirrer and a distillation unit, heated to 205°C over a 60 minute period in a nitrogen atmosphere at 760 Torr, and stirred. Subsequently, the pressure was reduced to 200 Torr over a 30-minute period and the mixture was held under the conditions of 205°C and 200 Torr for 30 minutes. Thereafter, the temperature was increased and the pressure was reduced to 215°C and 180 Torr, respectively, over a 20-minute period, then to 230°C and 150 Torr over a 40-minute period, and further to 240°C and 1 Torr or lower over a 60-minute period. The mixture was finally kept under the conditions of 240°C and 1 Torr or lower for 20 minutes. After confirming that the reaction solution had reached an appropriate melt viscosity, stirring was stopped, and nitrogen was blown into the reactor to apply pressure to obtain a polycarbonate resin (Resin 4).

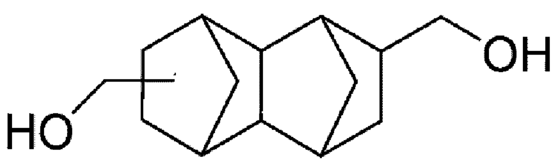

(D-NDM)

(Compounding agent production example 1)

Oligomer compounding agent: BNE-3PC

As raw materials, 84.38 g (0.2253 mol) of 2,2'-bis(2-hydroxyethoxy)-1,1'-binaphthalene (BNE), 65.12 g (0.3042 mol) of DPC, and 2.21 $\times$ $10^{-4}$ g (2.63 $\times$ $10^{-6}$ mol) of sodium bicarbonate were placed in a 500 ml reactor equipped with a stirrer and a distillation unit. After nitrogen replacement, the mixture was heated to 205°C over a period of 1 hour in a nitrogen atmosphere at 760 Torr and stirred. After the raw materials were completely dissolved, the pressure was reduced to 150 Torr over a 15-minute period, and the mixture was held under the conditions of 205°C and 150 Torr for 20 minutes to allow transesterification reaction. The temperature was further increased to 240°C at a rate of 37.5°C/hr and kept at 240°C and 150 Torr for 10 minutes. The pressure was then adjusted to 120 Torr over a 10-minute period and kept at 240°C and 120 Torr for 70 minutes. The pressure was then adjusted to 100 Torr over a 10-minute period and kept at 240°C and 100 Torr for 10 minutes. The pressure was further reduced to 1 Torr or lower over a 40-minute period to terminate the reaction. Nitrogen was blown into the reactor to apply pressure, and the generated polycarbonate oligomer was taken out from the reactor. The obtained polycarbonate oligomer was found to have an average of three repeating units according to NMR measurement and a mass average molecular weight of 1400 according to GPC measurement.

(Examples 1 to 7 and Comparative examples 1 to 3)

The resin, the compounding agent, 1,000 ppm of pentaerythritol-tetrakis[3-(3,5-di-tert-butyl-4-hydroxyphenyl)propionate] (AO-60: antioxidant, manufactured by ADEKA Corporation), 1,500 ppm of glycerol monostearate (mold release agent: S-100A manufactured by Riken Vitamin Co., Ltd.), and 300 ppm of 3,9-bis(2,6-di-tert-butyl-4-methylphenoxy)-2,4,8,10-tetraoxa-3,9-diphosphaspiro[5.5]undecane (PEP-36: antioxidant, manufactured by ADEKA Corporation) were dry mixed in a tumbler, melt kneaded using a twin-screw extruder (IPT-type 35 mm co-rotating twin-screw extruder, LID = 38, manufactured by IPEC) at a cylinder temperature of 250°C, vent pressure of 25 Torr, and discharge rate of 20 kg/hr, and extruded as strands to obtain pellets of the polycarbonate resin composition.

The glass transition temperature (Tg), melt volume flow rate (MVR), refractive index (nd), and Abbe number (v) were measured or calculated for the obtained resin compositions, and the formability (fluidity) was visually observed. The results are shown in Table 1.

[Table 1]

| Table 1 | Resin | | Compounding agent (monomer or oligomer) | | | Physical properties | | Optical Properties | | Formability |
|---|---|---|---|---|---|---|---|---|---|---|
| | Resin type | Mass (mass%) | Name | Mass (mass%) | Thermal weight reduction onset temperature (°C) | Tg (°C) | MVR $cm^3/10$ min | Refractive index (nd) | Abbe number (v) | Flow mark |
| Example 1 | Resin 1 | 90 | DPBHBNA | 10 | 320 | 131 | >150 | 1.664 | 19.7 | A |
| Example 2 | Resin 1 | 90 | BNEF | 10 | 320 | 137 | >150 | 1.663 | 20.2 | A |
| Example 3 | Resin 1 | 90 | BNE-3PC | 10 | >320 | 129 | 145 | 1.662 | 19.7 | A |
| Example 4 | Resin 1 | 90 | BNE | 10 | 260 | 120 | >150 | 1.662 | 20.2 | B |
| Example 5 | Resin 2 | 90 | DPBHBNA | 10 | 320 | 141 | >150 | 1.682 | 17.9 | A |
| Example 6 | Resin 2 | 90 | BNEF | 10 | 320 | 143 | >150 | 1.680 | 18.3 | A |
| Example 7 | Resin 2 | 90 | BNE-3PC | 10 | >320 | 138 | 101 | 1.678 | 18.4 | A |
| Comparative example 1 | Resin 1 | 100 | --- | 0 | --- | 140 | 32 | 1.661 | 20.4 | C |
| Comparative example 2 | Resin 2 | 100 | --- | 0 | --- | 148 | 24 | 1.680 | 18.3 | C |
| Comparison example 3 | Resin 3 | 90 | BNE | 10 | 260 | 122 | >150 | 1.643 | 22.9 | D |

As shown in Table 1, the resin composition of the present invention is a thermoplastic resin composition that is highly fluid and that has good moldability and excellent optical properties without compromising the properties as an optical resin composition. According to the present invention, optical materials such as an optical lens and an optical film can be formed precisely from this resin composition.

## Claims

1. A resin composition comprising:

   a thermoplastic resin; and
   a compounding agent having a naphthalene structure and/or a fluorene structure,
   wherein the compounding agent having a naphthalene structure and/or a fluorene structure contains one or more compounds selected from compounds containing a structural unit represented by any of General formulae (1)-(3) below:

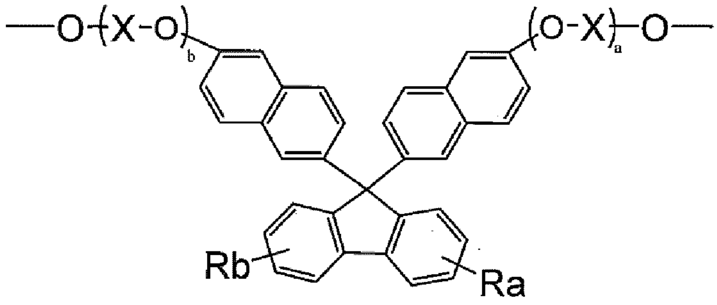

(1)

(in Formula (1),

$R_a$ and $R_b$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
a and b each independently represent an integer from 0 to 10);

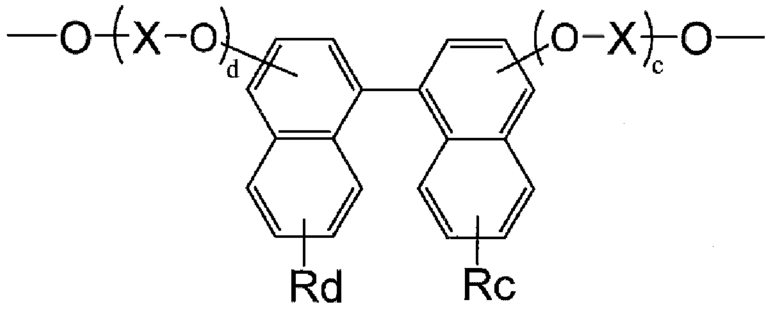

(2)

(in Formula (2),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - $C{\equiv}C-R_h$,
$R_h$ represents an aryl group with 6-20 carbon atoms or a heteroaryl group with 6-20 carbon atoms containing one or more heteroatoms selected from O, N and S,
a hydrogen atom, a fluorine atom, a chlorine atom, a bromine atom, an iodine atom, an alkyl group

with 1-6 carbon atoms, or an aryl group with 6-20 carbon atoms, alkenyl group with 2-6 carbon atoms, alkoxy group with 1-6 carbon atoms, or aralkyl group with 7-17 carbon atoms which may contain a heteroatom selected from O, N and S,
X represents a saturated carbon group with 1-5 carbon atoms, and
c and d each independently represent an integer from 0 to 10); and

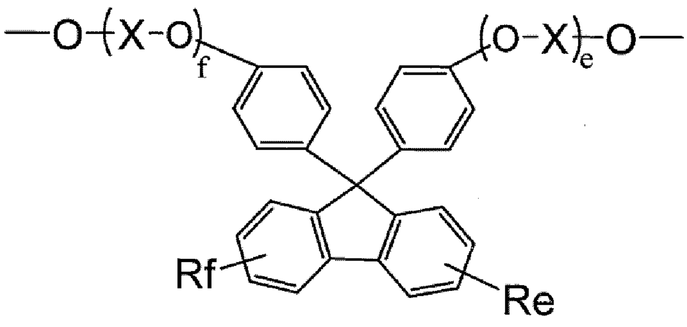

(3)

(in Formula (3),

$R_e$ and $R_f$ each independently represent a hydrogen atom, a fluorine atom, a chlorine atom, a bromine atom, an iodine atom, an alkyl group with 1-20 carbon atoms, or an aryl group with 6-20 carbon atoms, alkenyl group with 2-20 carbon atoms, alkoxy group with 1-20 carbon atoms, or aralkyl group with 7-20 carbon atoms which may contain a heteroatom selected from O, N and S,
X represents a saturated carbon group with 1-5 carbon atoms, and
e and f each independently represent an integer from 0 to 5).

**2.** The resin composition according to Claim 1, wherein the compounding agent having a naphthalene structure and/or a fluorene structure is one or more selected from the group consisting of diol monomers having a structural unit represented by any of General formulae (1) to (3), and polycarbonate oligomers containing a structural unit represented by any of General formulae (1)-(3) as a diol structure, and wherein $R_a$, $R_b$, $R_c$, $R_d$, $R_e$, $R_f$, a, b, c, d, e, and f are the same as those described in Claim 1.

**3.** The resin composition according to Claim 2, wherein the polycarbonate oligomer containing a structural unit represented by any of General formulae (1) to (3) above as a diol structure is represented by any of the following formulae, and wherein $R_a$, $R_b$, $R_c$, $R_d$, $R_e$, $R_f$, a, b, c, d, e, and f are the same as those described in Claim 1:

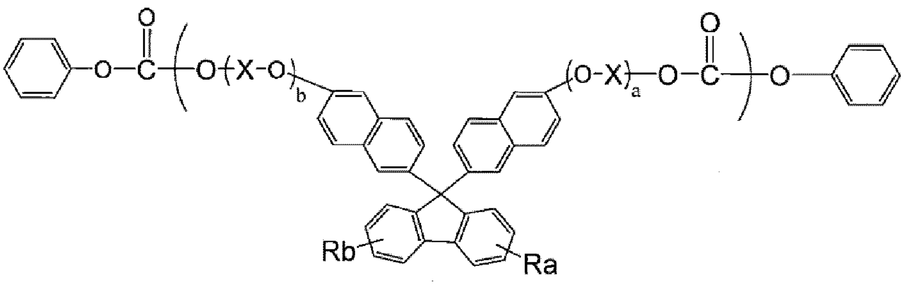

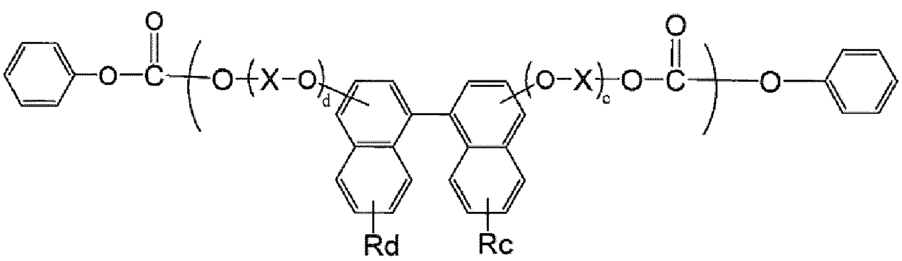

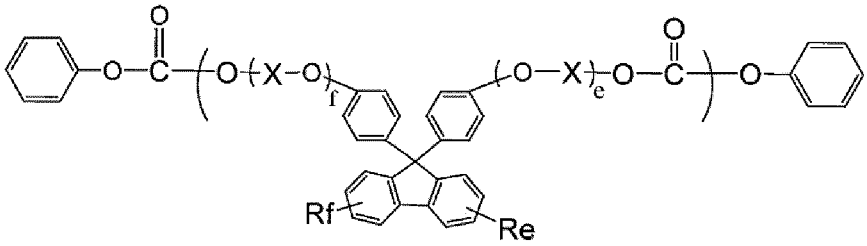

.

4. The resin composition according to any one of Claims 1 to 3, wherein the 5% thermal mass reduction onset temperature (5% thermal mass reduction temperature) of the compounding agent is 260°C or higher.

5. The resin composition according to any one of Claims 1 to 4, wherein the mass average molecular weight of the compounding agent is less than 10,000.

6. The resin composition according to any one of 1 to 5, wherein the mass ratio of the thermoplastic resin to the compounding agent is thermoplastic resin:compounding agent = 99: 1 to 70:30.

7. The resin composition according to any one of Claims 1 to 6, wherein the polystyrene-equivalent molecular weight (Mw) of the thermoplastic resin is 10,000-100,000.

8. The resin composition according to any one of Claims 1 to 7, wherein the thermoplastic resin is selected from the group consisting of a polycarbonate resin, a polyester resin, and a polyester carbonate resin.

9. The resin composition according to any one of Claims 1 to 8, wherein the thermoplastic resin contains a structural unit derived from a compound represented by General formula (a) below:

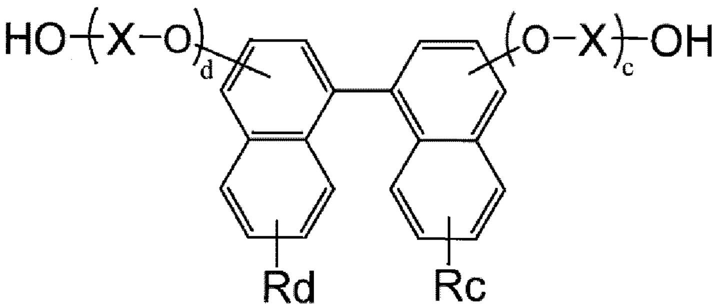

(a)

(in Formula (a),

$R_c$ and $R_d$ are each independently selected from a halogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, a heteroaryl group with 6-20 carbon atoms or aryloxy group with 6-20 carbon atoms which contains one or more heteroatoms selected from O, N and S, and - C≡C-$R_h$, $R_h$ represents an aryl group with 6-20 carbon atoms or a heteroaryl group with 6-20 carbon atoms containing one or more heteroatoms selected from O, N and S,
X represents a saturated carbon group with 1-5 carbon atoms, and
c and d each independently represent an integer from 0 to 10).

10. An optical material comprising the resin composition according to any one of Claims 1 to 9.

11. An optical lens comprising the resin composition according to any one of Claims 1 to 9.

12. An optical film comprising the resin composition according to any one of Claims 1 to 9.

## INTERNATIONAL SEARCH REPORT

International application No. PCT/JP2021/023186

A. CLASSIFICATION OF SUBJECT MATTER
Int.Cl. C08K5/10(2006.01)i, C08L67/00(2006.01)i, C08L101/00(2006.01)i, G02B1/04(2006.01)i
FI: C08L101/00, G02B1/04, C08K5/10, C08L67/00
According to International Patent Classification (IPC) or to both national classification and IPC

B. FIELDS SEARCHED
Minimum documentation searched (classification system followed by classification symbols)
Int.Cl. C08K5/10, C08L67/00, C08L101/00, G02B1/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2017/078073 A1 (MITSUBISHI GAS CHEMICAL COMPANY, INC.) 11 May 2017 (2017-05-11), claims, paragraphs [0015], [0016], examples, table 1, oligomer 2 | 1-8, 10-12<br>9 |
| Y | WO 2019/044875 A1 (MITSUBISHI GAS CHEMICAL COMPANY, INC.) 07 March 2019 (2019-03-07), claims, paragraph [0013], examples | 9 |
| Y | WO 2019/043060 A1 (REUTER CHEMISCHE APPARATEBAU KG) 07 March 2019 (2019-03-07), claims, page 2, lines 5-9 | 9 |
| A | JP 2018-87284 A (OSAKA GAS CHEM KK) 07 June 2018 (2018-06-07) | 1-12 |
| A | WO 2019/146507 A1 (MITSUBISHI GAS CHEMICAL COMPANY, INC.) 01 August 2019 (2019-08-01) | 1-12 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>05 July 2021 | Date of mailing of the international search report<br>20 July 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No. PCT/JP2021/023186

C (Continuation). DOCUMENTS CONSIDERED TO BE RELEVANT

| Category* | Citation of document, with indication, where appropriate, of the relevant passages | Relevant to claim No. |
|---|---|---|
| P, X | WO 2020/137926 A1 (MITSUBISHI GAS CHEMICAL COMPANY, INC.) 02 July 2020 (2020-07-02) | 1-12 |
| P, X | WO 2021/014962 A1 (TEIJIN LTD.) 28 January 2021 (2021-01-28) | 1-12 |

Form PCT/ISA/210 (second sheet) (January 2015)

**INTERNATIONAL SEARCH REPORT**
Information on patent family members

International application No.
PCT/JP2021/023186

| | | |
|---|---|---|
| WO 2017/078073 A1 | 11 May 2017 | US 2019/0055351 A1<br>claims, paragraphs [0046]-[0048], examples, table 1, oligomer 2<br>KR 10-2018-0079358 A<br>CN 108350161 A<br>TW 201731909 A |
| WO 2019/044875 A1 | 07 March 2019 | US 2020/0181325 A1<br>claims, paragraph [0012], examples<br>EP 3677615 A1<br>KR 10-2020-0041975 A<br>CN 111094389 A<br>TW 201920353 A |
| WO 2019/043060 A1 | 07 March 2019 | EP 3676239 A1<br>KR 10-2020-0043404 A<br>CN 111094223 A<br>TW 201914987 A<br>JP 2020-534350 A |
| JP 2018-87284 A | 07 June 2018 | (Family: none) |
| WO 2019/146507 A1 | 01 August 2019 | TW 201940549 A |
| WO 2020/137926 A1 | 02 July 2020 | (Family: none) |
| WO 2021/014962 A1 | 28 January 2021 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- JP 2018059074 A
- WO 2017078073 A